# EUROPEAN PATENT APPLICATION

(11) **EP 4 804 254 A1**
(43) Date of publication of application: **09.09.2026**
(21) Application number: 24900876.4
(22) Date of filing: 05.11.2024
(51) Int. Cl.: H01M 4/525, H01M 4/505, H01M 4/36, C01G 53/00, H01M 4/02

(54) **POSITIVE ELECTRODE ACTIVE MATERIAL PRECURSOR, METHOD FOR MANUFACTURING POSITIVE ELECTRODE ACTIVE MATERIAL PRECURSOR, POSITIVE ELECTRODE ACTIVE MATERIAL, AND METHOD FOR MANUFACTURING POSITIVE ELECTRODE ACTIVE MATERIAL**

(30) Priority: 06.12.2023 KR 20230175808
(71) Applicant: LG Chem, Ltd., Seoul 07336 (KR)
(72) Inventor: KIM, Jun Gil, Daejeon 34122 (KR); KIM, Won Tae, Daejeon 34122 (KR); LIM, Young Geun, Daejeon 34122 (KR); KIM, Ju Hyun, Daejeon 34122 (KR); WON, Jae Hee, Daejeon 34122 (KR)
(74) Representative: Hoffmann Eitle
(86) International application number: PCT/KR2024/017322
(87) International publication number: WO 2025/121689

(57) **Abstract**

The present invention relates to a high-density positive electrode active material precursor, a method for manufacturing the positive electrode active material precursor, a high-density positive electrode active material, and a method for manufacturing the positive electrode active material, and provides a positive electrode active material precursor comprising: a manganese-nickel-based hydroxide including manganese and nickel, wherein the manganese-nickel-based hydroxide includes a porous core part (A); a first shell part (A1) formed on the core part; and a porous second shell part (A2) formed on the first shell part, wherein the first shell part (A1) has a thickness satisfying Equation 1 described herein, and wherein the positive electrode active material precursor has a tap density of 1.75 g/cm³ to 2.0 g/cm³ and a BET specific surface area of 18 m²/g to 25 m²/g, a method for manufacturing the same, a positive electrode active material manufactured using the same, and a method for manufacturing the positive electrode active material using the same.

## Description

### [Technical Field]

### CROSS-REFERENCE TO RELATED APPLICATION

The present application claims priority to Korean Patent Application No. 10-2023-0175808, filed on December 6, 2023, the entire content of which is incorporated herein for all purposes by reference.

### Technical Field

The present invention relates to a positive electrode active material precursor with improved density, a method for manufacturing the same, a positive electrode active material manufactured using the same, and a method for manufacturing the positive electrode active material.

### [Background Art]

As technology development and demand for mobile devices increase, demand for secondary batteries as an energy source is rapidly increasing. Among the secondary batteries, a lithium secondary battery, which has high energy density and voltage, long cycle life and low self-discharge rate, has been commercialized and is widely used.

Lithium transition metal composite oxides are used as the positive electrode active materials for the lithium secondary batteries, and among them, a lithium cobalt composite metal oxide of LiCoO₂, which has high operating voltage and excellent capacity characteristics, is mainly used. However, since LiCoO₂ has very poor thermal properties due to the instability of its crystal structure due to delithiation, and is also expensive, it has a limitation in mass use as a power source in fields such as electric vehicles.

As a material for replacing the above LiCoO₂, lithium manganese composite metal oxide (LiMnO₂ or LiMn₂O₄, etc.), lithium iron phosphate compound (LiFePO₄, etc.), or lithium nickel composite metal oxide (LiNiO₂, etc.), etc. have been developed. Among them, research and development on the lithium nickel composite metal oxide, which has a high reversible capacity of about 250 mAh/g and is easy to implement a large-capacity battery, is being actively conducted. However, the LiNiO₂ has inferior thermal stability compared to LiCoO₂, and has a problem that when an internal short circuit occurs due to external pressure, etc. in a charged state, the positive electrode active material itself is decomposed, causing rupture and firing of the battery.

Accordingly, as a method for improving the low thermal stability while maintaining the excellent reversible capacity of the LiNiO₂, a nickel-cobalt-manganese-based lithium composite metal oxide (hereinafter, NCM-based positive electrode active material) in which some of Ni is replaced with Mn and Co or Al has been developed.

However, recently, due to a rise in the price of cobalt (Co), lithium-rich NCM-based positive electrode active materials that can meet high capacity while containing a relatively small amount of cobalt (Co) or no cobalt (Co) at all are being developed.

Meanwhile, in the case of cobalt-free, Li- and Mn-rich positive electrode active materials, unlike general NCM-based positive electrode active materials, the amount of lithium required for calcination is large, and therefore, a porous structure through control of internal pores and primary particle shapes is required for smooth diffusion. However, the porous structure has the problem of lowering the strength of positive electrode active material particles, causing the particles to break during electrode rolling. For reference, the broken particles generate gases through side reactions with an electrolyte during the charging/discharging process of a battery, which causes the stability and performance of the battery to deteriorate.

Therefore, in cobalt-free and Mn-rich precursors, it is necessary to develop a positive electrode active material precursor and a positive electrode active material having improved internal density.

### [Disclosure]

### [Technical Problem]

The present invention is intended to solve the above problems, and aims to provide a positive electrode active material precursor capable of implementing a high-density positive electrode active material.

In addition, the present invention provides a method for manufacturing the positive electrode active material precursor.

In addition, the present invention provides a positive electrode active material manufactured using the positive electrode active material precursor, and a method for manufacturing the same.

### [Technical Solution]

In order to achieve the above object, the present invention provides a positive electrode active material precursor, a method for manufacturing the positive electrode active material precursor, a positive electrode active material, and a method for manufacturing the positive electrode active material.

(1) The present invention provides a positive electrode active material precursor comprising: a manganese-nickel-based hydroxide including manganese and nickel, wherein the manganese-nickel-based hydroxide includes a porous core part (A); a first shell part (A1) formed on the core part; and a porous second shell part (A2) formed on the first shell part, wherein the first shell part (A1) has a thickness satisfying Equation 1 below, and wherein the positive electrode active material precursor has a tap density of 1.75 g/cm³ to 2.0 g/cm³ and a BET specific surface area of 18 m²/g to 25 m²/g:

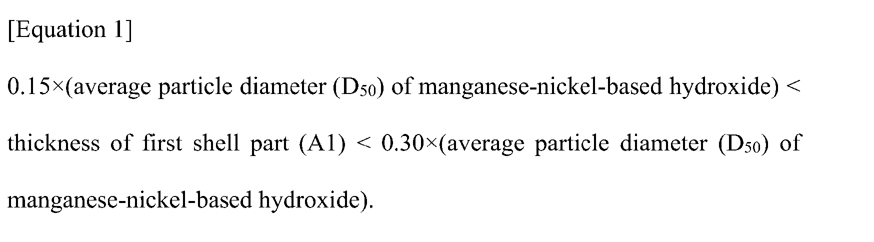

   0.15×(average particle diameter (D50) of manganese-nickel-based hydroxide) < thickness of first shell part (A1) < 0.30×(average particle diameter (D50) of manganese-nickel-based hydroxide).
(2) The present invention provides the positive electrode active material precursor according to (1) above, wherein the core part (A) has a diameter satisfying Equation 2 below:

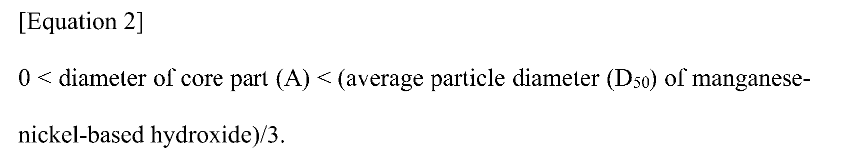

   0 < diameter of core part (A) < (average particle diameter (D50) of manganese-nickel-based hydroxide)/3.
(3) The present invention provides the positive electrode active material precursor according to (1) or (2) above, wherein the second shell part (A2) has a thickness satisfying Equation 3 below:

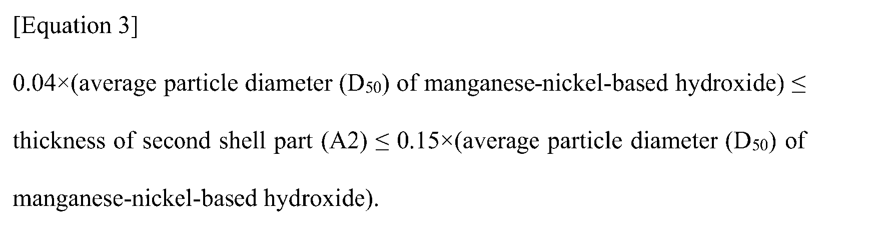

   0.04×(average particle diameter (D50) of manganese-nickel-based hydroxide) ≤ thickness of second shell part (A2) ≤ 0.15×(average particle diameter (D50) of manganese-nickel-based hydroxide).
(4) The present invention provides the positive electrode active material precursor according to any one of (1) to (3) above, wherein the manganese-nickel-based hydroxide contains 50 mol% or more of manganese among the total transition metals.
(5) The present invention provides the positive electrode active material precursor according to any one of (1) to (4) above, wherein the manganese-nickel-based hydroxide has a composition represented by Chemical Formula 1 below:

   [Chemical Formula 1] [Mnₐ₁Ni_{b1}M_{c1}](OH)₂

   wherein:
   M is at least one selected from Zr, Al, Re, V, Cr, Fe, Ga, Si, B, Ru, Ti, Nb, Mo, Mg, W, Na, and Pt, and
   0.5≤a1<1.0, 0<b1≤0.5, 0≤c1≤0.1, and a1+b1+c1=1.
(6) The present invention provides the positive electrode active material precursor according to any one of (1) to (5) above, wherein the manganese-nickel-based hydroxide has an average particle diameter (D₅₀) of 1 µm to 15 µm.
(7) The present invention provides the positive electrode active material precursor according to any one of (1) to (6) above, wherein the core part (A) has a diameter of 0.33 µm or more and less than 5 µm, the first shell part (A1) has a thickness of 0.3 µm or more and 4.5 µm or less, and the second shell part (A2) has a thickness of 0.05 µm or more and 0.75 µm or less.
(8) The present invention provides a method for manufacturing a positive electrode active material precursor, the method including the steps of: (S1) introducing a solvent and a basic solution into a reactor to adjust the pH to 12.0 to 13.0, and then purging an inert gas to create a non-oxidizing atmosphere; (S2) continuously introducing a transition metal-containing solution including manganese and nickel and a basic solution into the reactor, and performing a coprecipitation reaction under the pH of 12.0 to 13.0 to form a porous core part (A); (S3) continuously introducing a transition metal-containing solution including manganese and nickel and a basic solution into the reactor that has gone through step (S2), and performing a coprecipitation reaction while repeating a process of lowering the pH by 0.25 to 0.5 every 20 to 60 minutes at pH 10.0 to 11.0 and then restoring the pH, thereby forming a first shell part (A1) on the porous core part (A); and (S4) continuously introducing a transition metal-containing solution containing manganese and nickel and a basic solution into the reactor that has gone through step (S3), and performing a coprecipitation reaction at pH 10.0 to 11.0 to form a porous second shell part (A2) on the first shell part (A1), thereby producing a manganese-nickel-based hydroxide including manganese and nickel, wherein the steps (S2) to (S4) are performed under an oxidizing atmosphere, and the coprecipitation reaction in the step (S3) is performed for 5 to 25 hours.
(9) The present invention provides the method for manufacturing a positive electrode active material precursor according to (8) above, wherein the coprecipitation reaction in the step (S2) is performed for 0.1 to 2.0 hours.
(10) The present invention provides the method for manufacturing a positive electrode active material precursor according to (8) or (9) above, wherein the coprecipitation reaction in the step (S4) is performed for 35 to 55 hours.
(11) The present invention provides the method for manufacturing a positive electrode active material precursor according to any one of (8) to (10), wherein the oxidizing atmosphere is formed by introducing air and an inert gas into the reactor.
(12) The present invention provides the method for manufacturing a positive electrode active material precursor according to any one of (8) to (11), wherein the air and the inert gas are introduced in a volume ratio of 0.5:99.5 to 15:85.
(13) The present invention provides a positive electrode active material comprising: a lithium-rich manganese-nickel-based oxide including manganese and nickel, wherein the lithium-rich manganese-nickel-based oxide simultaneously includes a Li₂MnO₃ phase and a LiMO₂ (wherein M includes at least one selected from Ni and Mn) phase, wherein the lithium-rich manganese-nickel-based oxide includes a porous core part (B); a first shell part (B1) formed on the core part; and a porous second shell part (B2) formed on the first shell part, wherein the first shell part (B1) has a thickness satisfying Equation 4 below, and wherein the positive electrode active material has a pellet density of 2.5 g/cm³ to 3.00 g/cm³ and a BET specific surface area of 0.20 m²/g to 1.0 m²/g: 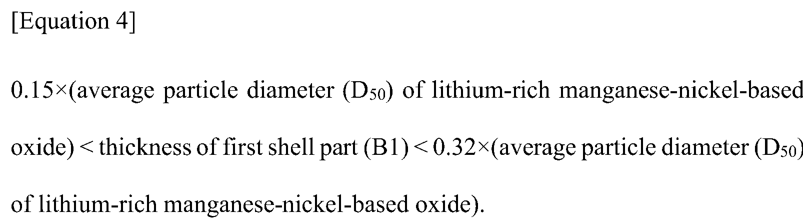
   0.15×(average particle diameter (D50) of lithium-rich manganese-nickel-based oxide) < thickness of first shell part (B1) < 0.32×(average particle diameter (D50) of lithium-rich manganese-nickel-based oxide).
(14) The present invention provides the positive electrode active material according to (13), wherein the lithium-rich manganese-nickel-based oxide contains 50 mol% or more of manganese among the total transition metals excluding lithium.
(15) The present invention provides the positive electrode active material according to (13) or (14) above, wherein the lithium-rich manganese-nickel-based oxide has a composition represented by Chemical Formula 2 below:

   [Chemical Formula 2] xLi₂Mn₍₁₋ₚ₎M¹ₚO₃·(1-x)LiNi_{q}MnᵣM²ₛO₂

   wherein:
   M¹ and M² are each independently at least one selected from Zr, Al, Re, V, Cr, Fe, Ga, Si, B, Ru, Ti, Nb, Mo, Mg, W, Na, and Pt, and
   0<x<1.0, 0≤p≤0.1, 0<q≤0.5, 0.5≤r<1.0, 0≤s≤0.1, and q+r+s=1.
(16) The present invention provides a method for manufacturing a positive electrode active material, including a step of mixing the positive electrode active material precursor according to any one of (1) to (7) above and a lithium raw material, and then calcining the mixture.
(17) The present invention provides the method for manufacturing a positive electrode active material according to (16) above, wherein the positive electrode active material precursor and the lithium raw material are mixed so that a molar ratio of the total metal elements present in the positive electrode active material precursor and the lithium present in the lithium raw material is 1:1.2 to 1:1.6.
(18) The present invention provides the method for manufacturing a positive electrode active material according to (16) or (17) above, wherein the calcination is performed at 850°C to 950°C.

### [Advantageous Effects]

The positive electrode active material precursor according to the present invention includes an internal densified region having a specific thickness, and thus has a low BET specific surface area and a high tap density, so that a positive electrode active material having a high density can be provided.

According to the method for manufacturing the positive electrode active material precursor of the present invention, the positive electrode active material precursor can be easily manufactured.

The positive electrode active material according to the present invention includes an internal densified region having a specific thickness, and thus has a low BET specific surface area and a high pellet density, so that a battery having an excellent energy density can be implemented.

According to the method for manufacturing the positive electrode active material of the present invention, the positive electrode active material can be easily manufactured.

### [Description of Drawings]

FIG. 1 is an SEM image of a cross-section of a positive electrode active material precursor of Example 1.
FIG. 2 is an SEM image of a cross-section of a positive electrode active material of Example 1.
FIG. 3 is an SEM image of a cross-section of a positive electrode active material precursor of Example 2.
FIG. 4 is an SEM image of a cross-section of a positive electrode active material of Example 2.
FIG. 5 is an SEM image of a cross-section of a positive electrode active material precursor of Comparative Example 1.
FIG. 6 is an SEM image of a cross-section of a positive electrode active material of Comparative Example 1.
FIG. 7 is an SEM image of a cross-section of a positive electrode active material precursor of Comparative Example 2.
FIG. 8 is an SEM image of a cross-section of a positive electrode active material of Comparative Example 2.

### [Best Modes of the Invention]

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as 'comprise', 'include', and 'have' as used herein are intended to designate the presence of implemented features, numbers, steps, components, or combinations thereof, but not to preclude a possibility of existence or addition of one or more other features, numbers, steps, components, or combinations thereof.

In this specification, an average particle diameter (D₅₀) may be defined as a particle diameter corresponding to 50% of the volume cumulative amount in a particle diameter distribution curve of the particles. The average particle diameter (D₅₀) can be measured, for example, using a laser diffraction method. More specifically, the lithium composite transition metal oxide is dispersed in a dispersion medium, and then introduced into a commercially available laser diffraction particle size measuring device (e.g., Microtrac Mt 3000) and irradiated with ultrasonic waves of about 28 kHz at an output of 60 W. Then, the average particle diameter (D₅₀) corresponding to 50% of the particle diameter distribution in the measuring device can be calculated.

In this specification, a tap density is a value obtained by putting 50 g of a positive electrode active material precursor sample into a cylinder, tapping the cylinder containing the sample 3,000 times using a Tap Denser KYT-5000 (SEISHIN), reading a scale value to measure the volume, and calculating the tap density.

In this specification, a BET specific surface area is a value obtained by pretreating 3.00 g of a sample at 200°C under vacuum conditions using a surface area analyzer TriStar 2 plus (Micromeritics), and measuring it using a nitrogen adsorption method.

In this specification, a pellet density is a value calculated by Equation 5 below when a pellet is formed by applying force until a force equivalent to 2,000 kgf is reached using an automatic pellet press. Specifically, the pellet density is a value obtained according to (1) to (3) below:
(1) Using a universal testing machine (UTM, Instron, Model 5966), the zero point for thickness is adjusted using a cylindrical mold for a circular pellet holder.
(2) A positive electrode active material is put into the circular pellet holder, and force is applied until a force equivalent to 2,000 kgf is reached to measure a thickness of the formed pellet.
(3) The pellet volume is calculated using Equation 5 below, and the pellet density is calculated using Equation 6 below:

   $Pellet volume \left({cm}^{3}\right) = π {\left(radius of circular pellet holder\right)}^{2} \times pellet thickness$

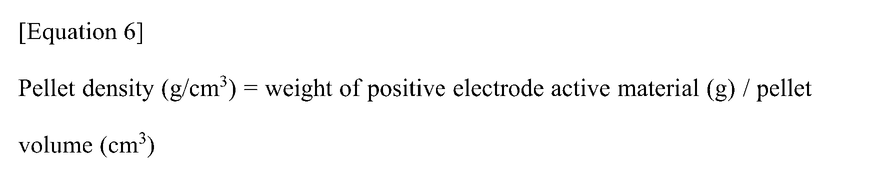

   Pellet density (g/cm3) = weight of positive electrode active material (g) / pellet volume (cm3)

### Positive Electrode Active Material Precursor

The present invention provides a positive electrode active material precursor capable of providing a positive electrode active material having excellent density by including a densified region inside and thus exhibiting a BET specific surface area and tap density in a specific range.

The positive electrode active material according to the present invention comprises: a manganese-nickel-based hydroxide including manganese and nickel, wherein the manganese-nickel-based hydroxide includes a porous core part (A); a first shell part (A1) formed on the core part; and a porous second shell part (A2) formed on the first shell part, wherein the first shell part (A1) has a thickness satisfying Equation 1 below, and wherein the positive electrode active material has a tap density of 1.75 g/cm³ to 2.0 g/cm³ and a BET specific surface area of 18 m²/g to 25 m²/g.

In the case of cobalt-free, Li- and Mn-rich positive electrode active materials, unlike general NCM-based positive electrode active materials, the amount of lithium required for calcination is large, and therefore, a porous structure through control of internal pores and primary particle shapes is required for smooth diffusion. However, the porous structure has the problem of lowering the strength of positive electrode active material particles, causing the particles to break during electrode rolling. Accordingly, there is a problem that the battery characteristics are deteriorated.

However, the positive electrode active material precursor according to the present invention includes a first shell part (A1), which is a densified region inside, with a specific thickness, and has a tap density of 1.75 g/cm³ to 2.0 g/cm³ and a BET specific surface area of 18 m²/g to 25 m²/g, so that the density of the positive electrode active material manufactured using it can be improved. The first shell part (A1) is a region in which pores (air gaps) are relatively significantly smaller than those of the core part and the second shell part.

Meanwhile, when the tap density of the positive electrode active material precursor is less than 1.75 g/cm³, a positive electrode active material with high energy density cannot be implemented, and when it is more than 2.0 g/cm³, the internal density of the precursor is too high, which is disadvantageous when calcined with excess lithium, making calcination difficult, or even if calcined, making capacity expression difficult.

In addition, when the BET specific surface area of the positive electrode active material precursor is less than 18 m²/g, calcination with excess lithium is disadvantageous, and when it is more than 25 m²/g, there is a problem that a positive electrode active material with high energy density cannot be implemented.

According to the present invention, the thickness of the first shell part (A1) satisfies Equation 1 below. In this case, even if a high pressure is applied in the process of manufacturing an electrode using the positive electrode active material manufactured from the positive electrode active material precursor according to the present invention, particle breakage of the positive electrode active material does not occur, so that a high energy density can be secured. 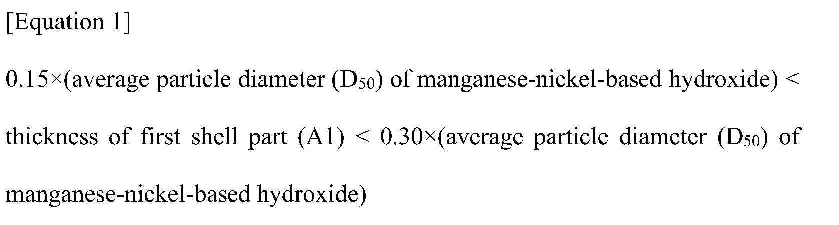 0.15×(average particle diameter (D50) of manganese-nickel-based hydroxide) < thickness of first shell part (A1) < 0.30×(average particle diameter (D50) of manganese-nickel-based hydroxide)

Meanwhile, when the thickness of the first shell part (A1) is less than 0.15 times the average particle diameter of the manganese-nickel-based hydroxide, there is a problem of particle breakage occurring in the process of manufacturing an electrode using the positive electrode active material manufactured therefrom, and when it is 0.30 times or more, there is a problem that lithium ion movement of the positive electrode active material manufactured therefrom is not easy, so the capacity of the battery is rather reduced and thus the energy density is low.

According to the present invention, the diameter of the core part (A) may satisfy Equation 2 below. This is a condition for a stable seed formation reaction when manufacturing a positive electrode active material precursor, and increases reproducibility during continuous production and allows the particle growth process to proceed easily thereafter. 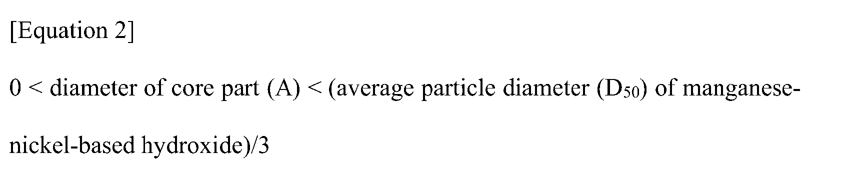 0 < diameter of core part (A) < (average particle diameter (D50) of manganese-nickel-based hydroxide)/3

According to the present invention, the thickness of the second shell part (A2) satisfies Equation 3 below. In this case, lithium ions are easily moved on the surface of the positive electrode active material manufactured from the positive electrode active material precursor according to the present invention, so that the performance of the battery can be secured. 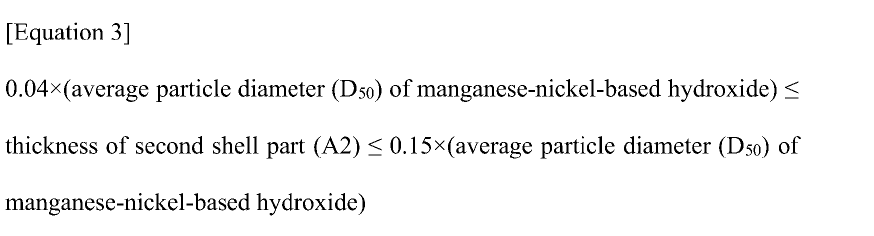 0.04×(average particle diameter (D50) of manganese-nickel-based hydroxide) ≤ thickness of second shell part (A2) ≤ 0.15×(average particle diameter (D50) of manganese-nickel-based hydroxide)

The core part (A) and the second shell part (A2) may each independently have a porosity of more than 0% and 30% or less. In this case, since lithium ions are easily moved, the performance of a battery including a positive electrode active material manufactured from a positive electrode active material precursor according to the present invention can be excellent.

According to the present invention, the manganese-nickel-based hydroxide may contain 50 mol% or more of manganese among the total transition metals. In this case, the capacity of a battery including a positive electrode active material manufactured from the positive electrode active material precursor according to the present invention can be high.

According to the present invention, the manganese-nickel-based hydroxide may have a composition represented by Chemical Formula 1 below. In this case, the capacity of a battery including a positive electrode active material manufactured from the positive electrode active material precursor according to the present invention can be excellent.

[Chemical Formula 1] [Mnₐ₁Ni_{b1}M_{c1}](OH)₂

wherein:
M is at least one selected from Zr, Al, Re, V, Cr, Fe, Ga, Si, B, Ru, Ti, Nb, Mo, Mg, W, Na, and Pt, and
0.5≤a1<1.0, 0<b1≤0.5, 0≤c1≤0.1, and a1+b1+c1=1.

The M is a doping element, and is not necessarily included, but when included in an appropriate amount, the particle shape of the positive electrode active material can be improved, and the stability of the crystal structure can be enhanced.

Meanwhile, the manganese-nickel-based hydroxide may not contain expensive cobalt, and can improve the performance of a lithium secondary battery without containing cobalt.

According to the present invention, the manganese-nickel-based hydroxide may have an average particle diameter (D₅₀) of 1 µm to 15 µm. The average particle diameter (D₅₀) of the manganese-nickel-based hydroxide may be specifically 1.0 µm or more, 1.5 µm or more, 2.0 µm or more, 2.5 µm or more, or 3.0 µm or more, and may be 10 µm or less, 10.5 µm or less, 11 µm or less, 11.5 µm or less, 12 µm or less, 12.5 µm or less, 13 µm or less, 13.5 µm or less, 14 µm or less, 14.5 µm or less, or 15 µm or less.

According to the present invention, the core part (A) may have a diameter of 0.33 µm or more and less than 5 µm, the first shell part (A1) may have a thickness of 0.3 µm or more and 4.5 µm or less, and the second shell part (A2) may have a thickness of 0.05 µm or more and 0.75 µm or less.

The diameter of the core part (A) may be specifically 0.33 µm, 1.0 µm or more, and 4.0 µm or less, and less than 5 µm in order to minimize the influence on the design of the first shell part (A1) and the second shell part (A2).

The thickness of the first shell part (A1) may be specifically 0.3 µm, 0.90 µm or more, and 3.6 µm, 4.5 µm or less. In this case, particle breakage may not occur even in the electrode process at high density, thereby ultimately securing a high energy density.

The thickness of the second shell part (A2) may be specifically 0.05 µm, 0.10 µm or more, and 0.40 µm, 0.75 µm or less. In this case, lithium diffusion can be facilitated.

According to the present invention, the positive electrode active material precursor may be in the form of a secondary particle formed by aggregation of primary particles. Specifically, as described below, it may be in the form of a secondary particle manufactured under an oxidizing atmosphere and formed by aggregation of thin, short, uniform needle-shaped primary particles. In this case, it is easy to react with excess lithium, and as a result, it can be easy to manufacture a Li- and Mn-rich positive electrode active material.

### Method for Manufacturing Positive Electrode Active Material Precursor

The present invention provides a method for manufacturing a positive electrode active material precursor according to the present invention described above.

The method for manufacturing a positive electrode active material precursor according to the present invention includes the steps of: (S1) introducing a solvent and a basic solution into a reactor to adjust the pH to 12.0 to 13.0, and then purging an inert gas to create a non-oxidizing atmosphere; (S2) continuously introducing a transition metal-containing solution including manganese and nickel and a basic solution into the reactor, and performing a coprecipitation reaction under the pH of 12.0 to 13.0 to form a porous core part (A); (S3) continuously introducing a transition metal-containing solution including manganese and nickel and a basic solution into the reactor that has gone through step (S2), and performing a coprecipitation reaction while repeating a process of lowering the pH by 0.25 to 0.5 every 20 to 60 minutes at a pH 10.0 to 11.0 and then restoring the pH, thereby forming a first shell part (A1) on the porous core part (A); and (S4) continuously introducing a transition metal-containing solution containing manganese and nickel and a basic solution into the reactor that has gone through step (S3), and performing a coprecipitation reaction at pH 10.0 to 11.0 to form a porous second shell part (A2) on the first shell part (A1), thereby producing a manganese-nickel-based hydroxide including manganese and nickel, wherein the steps (S2) to (S4) are performed under an oxidizing atmosphere, and the coprecipitation reaction in the step (S3) is performed for 5 to 25 hours.

Hereinafter, the method for manufacturing a positive electrode active material precursor according to the present invention will be specifically described step by step.

### Step (S1)

The step (S1) is a step for adjusting the inside of a reactor to a specific pH condition and a non-oxidizing (inert) atmosphere before a coprecipitation reaction, and may be performed by introducing a solvent and a basic solution into the reactor to adjust the pH to 12.0 to 13.0, and then purging an inert gas.

The solvent may be a polar solvent commonly used in the art, and may be, for example, water (distilled water, deionized water), alcohol, or a mixture thereof.

The inert gas is not particularly limited as long as it is an inert gas commonly used in the art, but may be, for example, at least one selected from nitrogen, argon, helium, and neon, and specifically, may be nitrogen.

The basic solution is a precipitant and serves to adjust the pH inside the reactor, and may be a solution containing a hydroxide of an alkali metal or alkaline earth metal such as NaOH, KOH, or Ca(OH)₂, a hydrate thereof, or a combination thereof. The basic solution may be a basic aqueous solution, wherein the solvent may be water (distilled water, deionized water), or a mixture of water and an organic solvent (e.g., alcohol, etc.) that can be uniformly mixed with water.

In the case where the pH in the step (S1) is 12.0 to 13.0, when a transition metal-containing solution including manganese and nickel is added in the subsequent step, the seeds may be appropriately generated without agglomeration. On the other hand, when the pH in the step (S1) exceeds 13.0, there is a problem that the seeds are excessively generated, limiting the particle growth rate, and when it is less than 12.0, there is a problem that the growth rate is too fast due to agglomeration between particles.

### Steps (S2) to (S4)

The steps (S2) to (S4) are steps for producing manganese-nickel-based hydroxide by coprecipitation reaction of a transition metal. In these steps, the inside of the reactor is again made into an active atmosphere (oxidizing atmosphere), a transition metal-containing solution and a basic solution are added, a coprecipitation reaction is performed at pH 12.0 to 13.0, and then a coprecipitation reaction is performed at pH 10.0 to 11.0.

Specifically, (S2) a transition metal-containing solution including manganese and nickel and a basic solution are continuously introduced into the reactor, and a coprecipitation reaction is performed under the pH of 12.0 to 13.0 to form a porous core part (A); (S3) a transition metal-containing solution including manganese and nickel and a basic solution are continuously introduced into the reactor that has gone through step (S2), and a coprecipitation reaction is performed while repeating a process of lowering the pH by 0.25 to 0.5 every 20 to 60 minutes at pH 10.0 to 11.0 and then restoring the pH, thereby forming a first shell part (A1) on the porous core part (A); and then (S4) a transition metal-containing solution containing manganese and nickel and a basic solution are continuously introduced into the reactor that has gone through step (S3), and a coprecipitation reaction is performed at pH 10.0 to 11.0 to form a porous second shell part (A2) on the first shell part (A1), thereby producing a manganese-nickel-based hydroxide including manganese and nickel.

When the coprecipitation reaction is performed under an oxidizing atmosphere as in the present invention, thin and uniform primary particles can be formed, and as a result, the BET specific surface area and density of the produced positive electrode active material precursor can be the same as those of the positive electrode active material precursor according to the present invention described above.

According to the present invention, the oxidizing atmosphere may be formed by introducing air and an inert gas into the reactor.

Specifically, the oxidizing atmosphere may be formed by introducing air and an inert gas into the reactor at a volume ratio of 0.5:99.5 to 15:85. Here, the inert gas may be as described above, and specifically, may be nitrogen.

According to the present invention, the porous core part (A) may be formed under pH 12.0 to 13.0, and the first shell part (A1) and the second shell part (A2) may be formed under pH 10.0 to 11.0. This is because a seed of the positive electrode active material precursor is formed under pH 12.0 to 13.0, and positive electrode active material precursor particles grow under pH 10.0 to 11.0.

Meanwhile, the growth of the positive electrode active material precursor particles may be performed under pH 10.0 to 11.0 for stable simultaneous coprecipitation. When the pH is less than 10.0, the transition metals present in the transition metal-containing solution do not coprecipitate simultaneously, and thus there may be a difference between the composition of the transition metal-containing solution and the composition of the synthesized precursor.

In addition, the formation of the first shell part (A1) may be performed while changing the pH by 0.25 to 0.5 within the pH range of 10.0 to 11.0 at intervals of 20 to 60 minutes, rather than continuously maintaining the constant. In this case, a coprecipitation reaction that increases the density of the particles occurs more easily than a coprecipitation reaction that attempts to grow outward from the center of the particles, so that a first shell part (A1) with almost no pores may be formed. That is, a first shell part (A1) having a relatively significantly smaller pores (air gaps) than that of the core part and the second shell part can be formed.

Finally, the formation of the second shell part (A2) may be performed at a specific pH within the pH range of 10.0 to 11.0. In other words, it may be performed under a constant pH. When the coprecipitation reaction is performed under an oxidizing atmosphere, thin and uniform primary particles are formed, and when the pH is constant, the coprecipitation reaction occurs well in the growth direction, so that pores are formed.

According to the present invention, the coprecipitation reaction in the step (S2) may be performed for 0.1 to 2.0 hours. The coprecipitation reaction time in the step (S2) may be specifically 0.1 hour or more, 0.2 hours or more, 0.3 hours or more, 0.4 hours or more, or 0.5 hours, and may be 1.0 hour or less, 1.1 hour or less, 1.2 hours or less, 1.3 hours or less, 1.4 hours or less, 1.5 hours or less, 1.6 hours or less, 1.7 hours or less, 1.8 hours or less, 1.9 hours or less, or 2.0 hours or less. In this case, the amount and size of the seed can be stably synthesized.

According to the present invention, the coprecipitation reaction in the step (S3) is performed for 5 to 25 hours. The coprecipitation reaction time in the step (S3) may be specifically 5 hours or more, 6 hours or more, 7 hours or more, 8 hours or more, 9 hours or more, or 10 hours or more, and 20 hours or less, 21 hours or less, 22 hours or less, 23 hours or less, 24 hours or less, or 25 hours or less. In this case, the density can be increased while minimizing the deterioration of the electrochemical performance. Meanwhile, when the coprecipitation reaction time in the step (S3) is less than 5 hours, there is a problem that the thickness of the first shell part (A1) is thin, and thus particle breakage occurs in the process of manufacturing an electrode using the positive electrode active material manufactured therefrom. When it is more than 25 hours, there is a problem that the thickness of the first shell part (A1) is thick, and thus lithium ion movement of the positive electrode active material manufactured therefrom is not easy, so that the capacity of the battery is rather reduced and thus the energy density is low.

According to the present invention, the coprecipitation reaction in the step (S4) may be performed for 35 to 55 hours. The coprecipitation reaction time in the step (S4) may be specifically 35 hours or more, 36 hours or more, 37 hours or more, 38 hours or more, 39 hours or more, or 40 hours, and may be 50 hours or less, 51 hours or less, 52 hours or less, 53 hours or less, 54 hours or less, or 55 hours or less. In this case, it is possible to form thin needle-shaped primary particles, which are advantageous for calcination.

Specifically, the coprecipitation reaction may be performed by adjusting the amount of the basic solution introduced so that the pH in the reactor becomes from 12.0 to 13.0 to 10.0 to 11.0 within 0.5 to 1.0 hours after starting the introduction of the transition metal-containing solution and the basic solution into the reactor, performing the reaction for 10 to 20 hours while changing the pH by 0.5 to 1.0 within the pH range of 10.0 to 11.0 at intervals of 20 to 60 minutes, and then performing the reaction for 40 to 50 hours while maintaining the pH at 10.0 to 11.0.

In addition, the coprecipitation reaction may be performed while stirring at a temperature of 40°C to 60°C, and the stirring speed is not particularly limited, but may be stirred at 100 rpm to 1,000 rpm in terms of improving the reaction speed.

The transition metal-containing solution may be prepared by adding and mixing a transition metal raw material to a solvent, specifically, water (distilled water, deionized water), or a mixed solvent of water and organic solvents (e.g. alcohol, etc.) that can be mixed uniformly with water, or may be prepared by mixing an aqueous solution of the transition metal raw material.

The transition metal-containing solution may contain manganese at 50 mol% or more among the total transition metals in the solution. The transition metal-containing solution may not contain cobalt.

The transition metal raw material may be a sulfate, acetate, nitrate, halide, sulfide, hydroxide, oxide, or oxyhydroxide containing a transition metal.

As a specific example, the nickel raw material may be, for example, a nickel-containing acetate, nitrate, sulfate, halide, sulfide, hydroxide, oxide or oxyhydroxide, and more specific examples thereof may be Ni(OH)₂, NiO, NiOOH, NiCO₃·2Ni(OH)₂·4H₂O, NiC₂O₂·2H₂O, Ni(NO₃)₂·6H₂O, NiSO₄·6H₂O, a fatty acid nickel salt, a nickel halide, or a combination thereof, but are not limited thereto.

In addition, the manganese raw material may be, for example, a manganese-containing acetate, nitrate, sulfate, halide, sulfide, hydroxide, oxide or oxyhydroxide, and more specific examples thereof may be manganese oxides such as Mn₂O₃, MnO₂, and Mn₃O₄; manganese salts such as MnCO₃, Mn(NO₃)₂, MnSO₄, manganese acetate, manganese dicarboxylate, manganese citrate, fatty acid manganese salt; manganese oxyhydroxide, manganese chloride, or a combination thereof, but are not limited thereto.

Meanwhile, the transition metal-containing solution may further include at least one selected from Zr, Al, Re, V, Cr, Fe, Ga, Si, B, Ru, Ti, Nb, Mo, Mg, W, Na, and Pt, and in this case, the transition metal-containing solution may further include a raw material containing the Zr, Al, Re, V, Cr, Fe, Ga, Si, B, Ru, Ti, Nb, Mo, Mg, W, Na, or Pt, wherein the raw material may be an acetate, a nitrate, a sulfate, a halide, a sulfide, a hydroxide, an oxide or an oxyhydroxide containing each of the above metals.

In addition, in the method for manufacturing a positive electrode active material precursor according to the present invention, at least one step selected from filtration, washing, and drying may be further performed after the step (S2). In addition, the filtration, washing, and drying may be performed by methods commonly known in the art.

### Positive Electrode Active Material

The present invention provides a positive electrode active material manufactured using the positive electrode active material precursor according to the present invention described above and having a high density.

The positive electrode active material according to the present invention comprises: a lithium-rich manganese-nickel-based oxide including manganese and nickel, wherein the lithium-rich manganese-nickel-based oxide simultaneously includes a Li₂MnO₃ phase and a LiMO₂ (wherein M includes at least one selected from Ni and Mn) phase, wherein the lithium-rich manganese-nickel-based oxide includes a porous core part (B); a first shell part (B1) formed on the core part; and a porous second shell part (B2) formed on the first shell part, wherein the first shell part (B1) has a thickness satisfying Equation 4 below. Further, the positive electrode active material according to the present invention has a pellet density of 2.5 g/cm³ to 3.00 g/cm³ and a BET specific surface area of 0.20 m²/g to 1.0 m²/g. 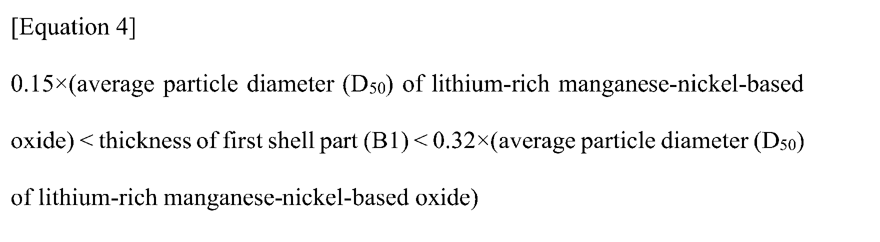 0.15×(average particle diameter (D50) of lithium-rich manganese-nickel-based oxide) < thickness of first shell part (B1) < 0.32×(average particle diameter (D50) of lithium-rich manganese-nickel-based oxide)

Specifically, the positive electrode active material according to the present invention may include a densified region (first shell part (B1)) with a specific thickness therein, and be manufactured from the positive electrode active material precursor having a BET specific surface area and a tap density satisfying a specific range, thereby having a high pellet density and thus excellent energy density. The positive electrode active material according to the present invention has a high pellet density, so that an electrode process can be performed without breaking even at a high rolling rate, thereby having a high energy density. Meanwhile, the positive electrode active material according to the present invention has a BET specific surface area within the above range by having an internal specific surface area that is reduced as the density increases.

According to the present invention, the thickness of the first shell part (B1) satisfies Equation 4 below. In this case, even if a high pressure is applied in the process of manufacturing an electrode using the positive electrode active material according to the present invention, particle breakage of the positive electrode active material does not occur, so that a high energy density can be secured. 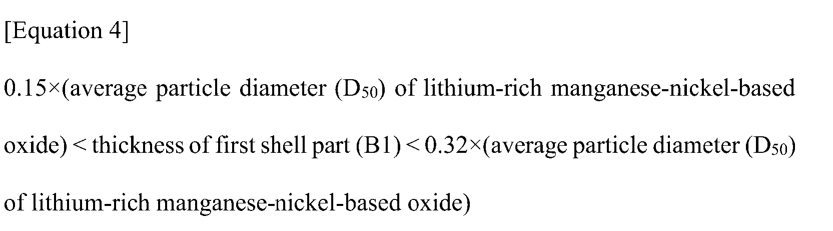 0.15×(average particle diameter (D50) of lithium-rich manganese-nickel-based oxide) < thickness of first shell part (B1) < 0.32×(average particle diameter (D50) of lithium-rich manganese-nickel-based oxide)

Meanwhile, when the thickness of the first shell part (B1) is less than 0.15 times the average particle diameter of the lithium-rich manganese-nickel-based oxide, there is a problem of particle breakage occurring in the process of manufacturing an electrode using the positive electrode active material, and when it is 0.32 times or more, there is a problem that lithium ion movement of the positive electrode active material is not easy, so the capacity of the battery is rather reduced and thus the energy density is low.

According to the present invention, the lithium-rich manganese-nickel-based oxide may contain 50 mol% or more of manganese among the total transition metals excluding lithium. In this case, it can be easy to secure a high capacity of the positive electrode active material.

According to the present invention, the lithium-rich manganese-nickel-based oxide may have a composition represented by Chemical Formula 2 below. In this case, the capacity of a battery including the positive electrode active material can be excellent.

[Chemical Formula 2] xLi₂Mn₍₁₋ₚ₎M¹ₚO₃·(1-x)LiNi_{q}MnᵣM²ₛO₂

wherein:
M¹ and M² are each independently at least one selected from Zr, Al, Re, V, Cr, Fe, Ga, Si, B, Ru, Ti, Nb, Mo, Mg, W, Na, and Pt, and
0<x<1.0, 0≤p≤0.1, 0<q≤0.5, 0.5≤r<1.0, 0≤s≤0.1, and q+r+s=1.

The M¹ and M² are doping elements, and are not necessarily included, but when included in an appropriate amount, the particle shape of the lithium-rich manganese-nickel-based oxide can be improved, and the stability of the crystal structure can be enhanced.

Meanwhile, the lithium-rich manganese-nickel-based oxide may not contain expensive cobalt, and can improve the performance of a lithium secondary battery without containing cobalt.

According to the present invention, the lithium-rich manganese-nickel-based oxide may have an average particle diameter (D₅₀) of 1.0 µm to 15 µm. The average particle diameter (D₅₀) of the lithium-rich manganese-nickel-based oxide may be specifically 1.0 µm or more, 1.5 µm or more, 2.0 µm or more, 2.5 µm or more, or 3.0 µm or more, and may be 12 µm or less, 12.5 µm or less, 13 µm or less, 13.5 µm or less, 14 µm or less, 14.5 µm or less, or 15 µm or less.

According to the present invention, the core part (B) may have a diameter of 0.33 µm or more and less than 5 µm, the first shell part (B1) may have a thickness of 0.3 µm or more and 4.5 µm or less, and the second shell part (B2) may have a thickness of 0.05 µm or more and 0.75 µm or less.

The diameter of the core part (B) may be specifically 0.33 µm, 1.0 µm or more, and 4.0 µm or less, and less than 5 µm in order to minimize the influence on the design of the first shell part (A1) and the second shell part (A2).

The thickness of the first shell part (B1) may be specifically 0.3 µm, 0.90 µm or more, and 3.6 µm, 4.5 µm or less. In this case, particle breakage may not occur even in the electrode process at high density, thereby ultimately securing a high energy density.

The thickness of the second shell part (B2) may be specifically 0.05 µm, 0.10 µm or more, and 0.40 µm, 0.75 µm or less. In this case, lithium diffusion can be facilitated.

### Method for Manufacturing Positive Electrode Active Material

The present invention provides a method for manufacturing a positive electrode active material, which is capable of manufacturing the positive electrode active material according to the present invention described above.

The method for manufacturing a positive electrode active material according to the present invention includes a step of mixing the positive electrode active material precursor according to the present invention described above with a lithium raw material, and then calcining the mixture.

The lithium raw material may be a lithium-containing carbonate (e.g., lithium carbonate, etc.), a hydrate (e.g., lithium hydroxide hydrate (LiOH·H₂O), etc.), a hydroxide (e.g., lithium hydroxide, etc.), a nitrate (e.g., lithium nitrate (LiNO₃), etc.), a chloride (e.g., lithium chloride (LiCl), etc.), etc., and one alone or a mixture of two or more thereof may be used.

The mixing of the positive electrode active material precursor and the lithium raw material may be performed by solid-state mixing such as jet milling, and a mixing ratio of the positive electrode active material precursor and the lithium raw material may be determined in a range that satisfies a mole fraction of each component in the positive electrode active material to be finally manufactured.

According to the present invention, the positive electrode active material precursor and the lithium raw material may be mixed so that a molar ratio of the total metal elements present in the positive electrode active material precursor and the lithium present in the lithium raw material is 1:1.2 to 1:1.6. In this case, a two-phase Li- and Mn-rich positive electrode active material without impurity phases can be manufactured.

In addition, although not essential, raw materials for doping some of the transition metals and/or oxygen of the positive electrode active material may be further included in addition to the positive electrode active material precursor and the lithium raw material during the mixing. For example, the M-containing raw material described above or an X-containing raw material to be described later may be further mixed during the mixing. Here, the X-containing raw material may be, for example, Na₃PO₄, K₃PO₄, Mg₃(PO₄)₂, AlF₃, NH₄F, LiF, etc., but is not limited thereto. As described above, when some of oxygen is replaced by the X element, an effect of suppressing oxygen desorption and reaction with an electrolyte during charging and discharging of the secondary battery can be obtained.

According to the present invention, the calcination may be performed at 800°C to 1,000°C, specifically 850°C to 950°C. In this case, all of the rich lithium ions can participate in the reaction, and a two-phase, highly crystalline, Li- and Mn-rich positive electrode active material without impurity phases can be manufactured.

In addition, the calcination time may be 7 hours to 13 hours, specifically 9 hours to 11 hours, but is not limited thereto.

According to the present invention, in order to allow all of the rich lithium ions to participate in the reaction, the calcination may be performed under an atmospheric atmosphere.

### Positive Electrode

The present invention provides a positive electrode including the positive electrode active material. That is, there is provided a positive electrode including the bimodal positive electrode active material.

The positive electrode may include a positive electrode current collector and a positive electrode active material layer formed on the positive electrode current collector, wherein the positive electrode active material layer may include the positive electrode active material.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 µm to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity characteristics within this range.

The conductive material is used to impart conductivity to the electrode, and may be any material without particular limitation as long as it has electronic conductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as zinc oxide and potassium titanate; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer, which may be applied on a positive electrode current collector, and then dried and rolled to manufacture the positive electrode. Alternatively, the positive electrode may be manufactured by casting the composition for forming a positive electrode active material layer on a separate support, peeling off the support to obtain a film, and laminating the film on a positive electrode current collector.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

### Lithium Secondary Battery

The present invention provides a lithium secondary battery including the positive electrode described above.

The lithium secondary battery may include: the positive electrode; a negative electrode; and a separator and an electrolyte interposed between the positive electrode and the negative electrode. In addition, the lithium secondary battery may optionally further include a battery container for accommodating an electrode assembly formed of the positive electrode, negative electrode, and separator, and a sealing member for sealing the battery container.

The negative electrode may include a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 µm to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer may optionally include a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

The binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming the negative electrode active material layer on a separate support, peeling a film from the support, and then laminating the film on a negative electrode current collector.

The separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethylcarbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention stably exhibits excellent capacity characteristics, output characteristics, and lifespan characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

### [Modes for Carrying Out the Invention]

Hereinafter, examples of the present invention will be described in detail so that those skilled in the art can easily perform the present invention. However, the present invention may be embodied in a variety of forms and is not limited to the examples described herein.

### Examples and Comparative Examples

### Example 1

### (Manufacture of Positive Electrode Active Material Precursor)

MnSO₄ and NiSO₄ were mixed in deionized water in an amount such that a molar ratio of Mn:Ni was 65:35 to prepare a transition metal aqueous solution having a concentration of 2.4 M, and an NaOH aqueous solution having a concentration of 25% by weight was prepared.

2.6 L of deionized water and 3.5 ml of the NaOH aqueous solution were added to a 10 L continuous stirring tank reactor and stirred at 150 rpm while maintaining 50°C to adjust the pH in the reactor to 12.0, and nitrogen gas was purged at 2 L/min to remove dissolved oxygen and create a non-oxidizing atmosphere.

Thereafter, nitrogen and air were injected into the reactor at a volume ratio of 90:10 while stirring at 1,000 rpm to create a weak oxidizing atmosphere, and the transition metal aqueous solution and the NaOH aqueous solution were continuously injected into the reactor and coprecipitated to prepare a manganese-nickel-based hydroxide.

In this case, the transition metal aqueous solution was injected at a flow rate of 0.85 L/hr, and the NaOH aqueous solution was injected at a flow rate such that the pH in the reactor became 10.0 within 1 hour from the reaction start time. That is, for 1 hour from the reaction start time, a coprecipitation reaction was performed under pH 12.0 to 10.0 to form a precursor seed.

After the pH became 10.0, a coprecipitation reaction was performed for 20 hours while repeating a process of increasing and decreasing the pH by 0.5 at 30-minute intervals by adjusting the amount of the NaOH aqueous solution injected (i.e., a process of reacting at pH 10.0 for 30 minutes and then at pH 10.5 for 30 minutes) to form a first shell part (A1), and then a coprecipitation reaction was performed for 40 hours while maintaining the pH at 10.0 to form a second shell part (A2) (precursor particle growth process).

Thereafter, the manganese-nickel-based hydroxide was washed with deionized water, filtered, and dried at 100°C for 12 hours to manufacture a positive electrode active material precursor (composition: Mn_{0.65}Ni_{0.35}(OH)₂).

### (Manufacture of Positive Electrode Active Material)

The above positive electrode active material precursor and LiOH were mixed so that a molar ratio of (Mn+Ni):Li was 1:1.3, and calcined at 900°C for 10 hours to manufacture a positive electrode active material (composition: 0.26[Li₂MnO₃]·0.61[LiNi_{0.5}Mn_{0.5}O₂]). Here, the positive electrode active material is composed of an R3-m, Rhombohedral phase and a C2/m, Monoclinic phase.

### Example 2

A precursor and positive electrode active material were manufactured in the same manner as in Example 1, except that the formation time of the first shell part (A1) was adjusted to 10 hours and the formation time of the second shell part (A2) was adjusted to 50 hours.

### Comparative Example 1

A precursor and positive electrode active material were manufactured in the same manner as in Example 1, except that the formation time of the first shell part (A1) was adjusted to 40 hours and the formation time of the second shell part (A2) was adjusted to 20 hours.

### Comparative Example 2

### (Manufacture of Positive Electrode Active Material Precursor)

MnSO₄ and NiSO₄ were mixed in deionized water in an amount such that a molar ratio of Mn:Ni was 65:35 to prepare a transition metal aqueous solution having a concentration of 2.4 M, and an NaOH aqueous solution having a concentration of 25% by weight was prepared.

2.6 L of deionized water and 3.5 ml of the NaOH aqueous solution were added to a 10 L continuous stirring tank reactor and stirred at 150 rpm while maintaining 50°C to adjust the pH in the reactor to 12.0, and nitrogen gas was purged at 2 L/min to remove dissolved oxygen and create a non-oxidizing atmosphere.

Thereafter, nitrogen and air were injected into the reactor at a volume ratio of 90:10 while stirring at 1,000 rpm to create a weak oxidizing atmosphere, and the transition metal aqueous solution and the NaOH aqueous solution were continuously injected into the reactor and coprecipitated to prepare a manganese-nickel-based hydroxide.

In this case, the transition metal aqueous solution was injected at a flow rate of 0.85 L/hr, and the NaOH aqueous solution was injected at a flow rate such that the pH in the reactor became 10.0 within 1 hour from the reaction start time. That is, for 1 hour from the reaction start time, a coprecipitation reaction was performed under pH 12.0 to 10.0 to form a precursor seed. Thereafter, a coprecipitation reaction was performed for 60 hours while maintaining the pH 10.0 to grow precursor particles.

Thereafter, the manganese-nickel-based hydroxide was washed with deionized water, filtered, and dried at 100°C for 12 hours to manufacture a positive electrode active material precursor (composition: Mn_{0.65}Ni_{0.35}(OH)₂).

### (Manufacture of Positive Electrode Active Material)

The above positive electrode active material precursor and LiOH were mixed so that a molar ratio of (Mn+Ni):Li was 1:1.3, and calcined at 900°C for 10 hours to manufacture a positive electrode active material (composition: 0.26[Li₂MnO₃]·0.61[LiNi_{0.5}Mn_{0.5}O₂]).

### Experimental Example 1

The average particle diameter (D₅₀) of each of the positive electrode active material precursors and positive electrode active materials manufactured in the examples and comparative examples was measured using a particle size analyzer (Microtrac, S3500), and the results were shown in Table 1 below.

Specifically, 0.1 g of each of the positive electrode active material precursor and positive electrode active material samples manufactured in the examples and comparative examples was added to 0.5 ml of a dispersant and 10 ml of deionized water, dispersed for 1 minute using ultrasonic waves, and then placed in a particle size analyzer (Microtrac, S3500) and analyzed.

### Experimental Example 2

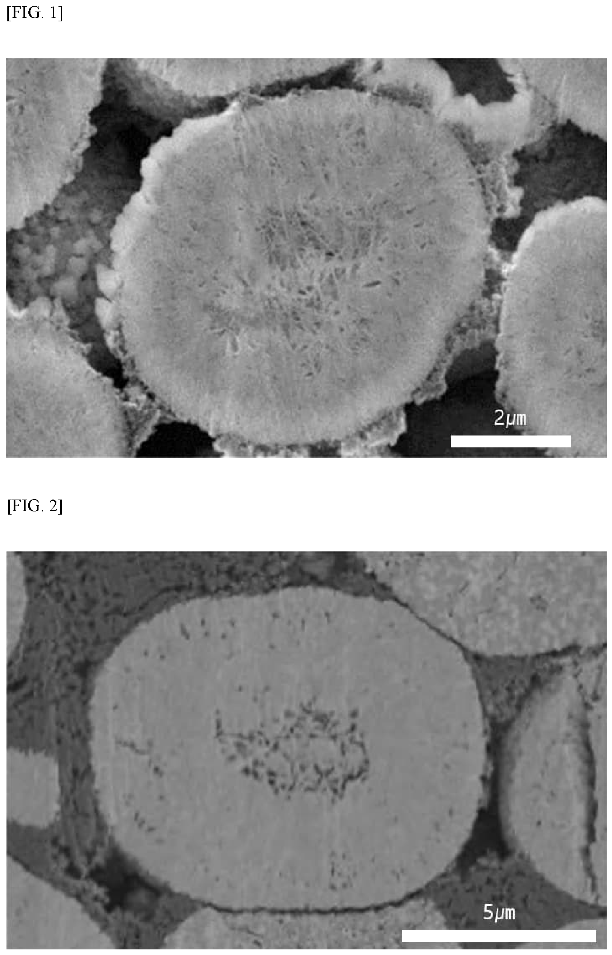

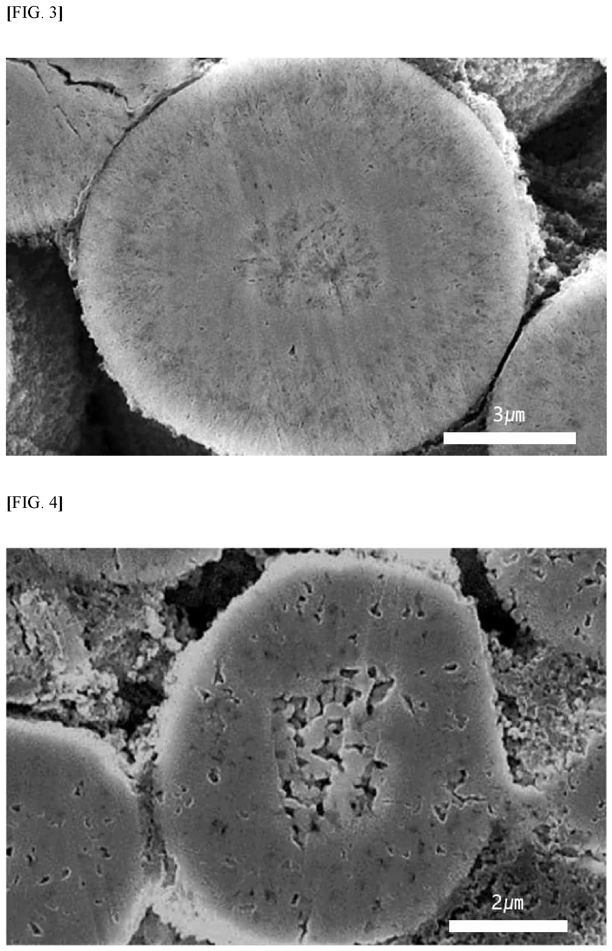

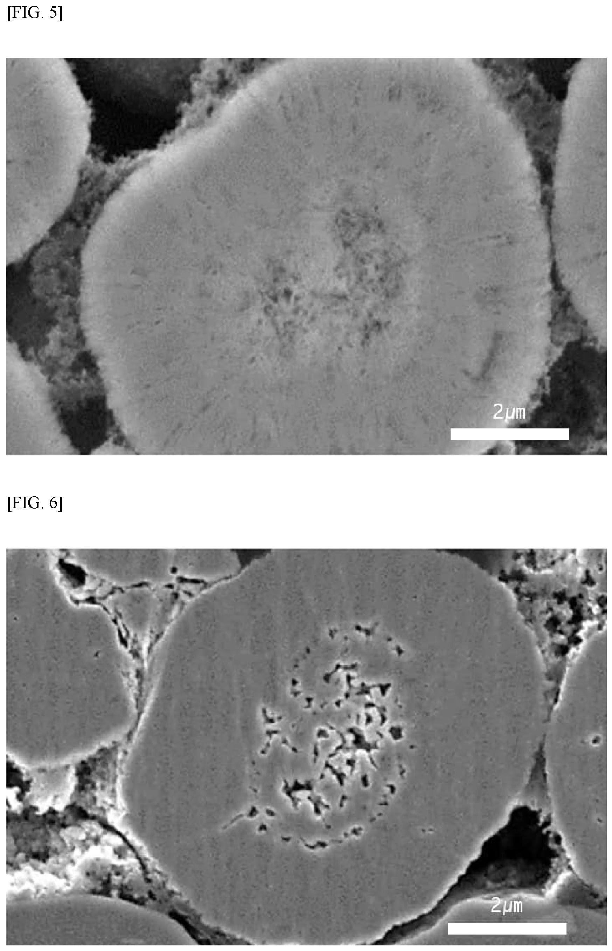

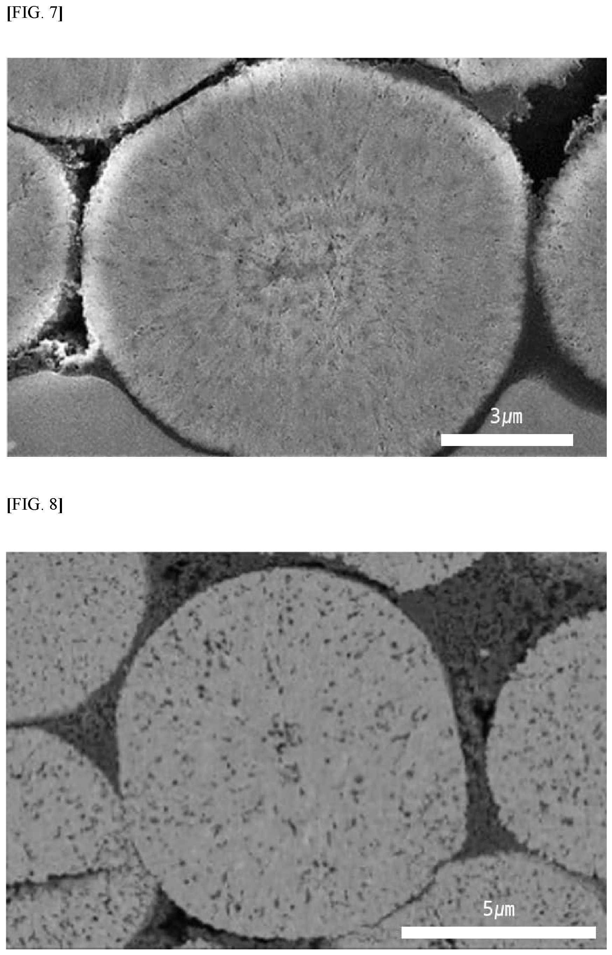

The cross-sections of each of the positive electrode active material precursors and positive electrode active materials manufactured in the examples and comparative examples were analyzed using SEM (QUANTA FEG 250, Thermo Fischer), and the results were shown in FIGS. 1 to 8. Specifically, FIG. 1 is an SEM image of a cross-section of the positive electrode active material precursor of Example 1, FIG.2 is an SEM image of a cross-section of the positive electrode active material of Example 1, FIG. 3 is an SEM image of a cross-section of the positive electrode active material precursor of Example 2, and FIG. 4 is an SEM image of a cross-section of the positive electrode active material of Example 2. In addition, FIG. 5 is an SEM image of a cross-section of the positive electrode active material precursor of Comparative Example 1, FIG.6 is an SEM image of a cross-section of the positive electrode active material of Comparative Example 1, FIG. 7 is an SEM image of a cross-section of the positive electrode active material precursor of Comparative Example 2, and FIG. 8 is an SEM image of a cross-section of the positive electrode active material of Comparative Example 2.

In addition, the diameter of the core part (A), the thickness of the first shell part (A1), and the thickness of the second shell part (A2) in the positive electrode active material precursor, and the diameter of the core part (B), the thickness of the first shell part (B1), and the thickness of the second shell part (B2) in the positive electrode active material were measured (using a length measuring tool in the SEM device), and were shown in Table 1 below.

For reference, when measuring the diameter of the core part and the thickness of the shell part in the positive electrode active material precursor and positive electrode active material, the lengths were actually measured in various directions from the center of the particle toward the surface, and the average value was used. A part where pores clearly disappear or appear in the cross-sectional image was divided and corresponded to the reaction time during precursor synthesis to distinguish the core part, the first shell part, and the second shell part.

**[Table 1]**

| Division | Positive electrode active material precursor | | | | Positive electrode active material | | | |
|---|---|---|---|---|---|---|---|---|
| | D₅₀ (µm) | Core part (A) diameter (µm) | First shell part (A1) thickness (µm) | Second shell part (A1) thickness (µm) | D₅₀ (µm) | Core part (B) diameter (µm) | First shell part (B1) thickness (µm) | Second shell part (B1) thickness (µm) |
| Example 1 | 9.96 | 3.12 | 2.98 | 0.44 | 9.36 | 3.10 | 2.85 | 0.28 |
| Example 2 | 10.5 | 3.36 | 2.11 | 1.46 | 9.66 | 3.32 | 1.85 | 1.32 |
| Comparative Example 1 | 10.0 4 | 3.40 | 3.22 | 0.10 | 9.78 | 3.32 | 3.22 | 0.01 |
| Comparative Example 2 | 10.1 7 | 3.15 | 0.01 | 3.50 | 9.79 | 2.97 | 0.11 | 3.30 |

Referring to FIGS. 1 to 4 and Table 1, it can be confirmed that each of the positive electrode active material precursors and the positive electrode active materials of Examples 1 and 2 sequentially has a core part, a shell part (first shell part) with relatively few pores formed on the core part, and a shell part (second shell part) with relatively many pores, and that the thickness of the first shell part satisfies Equations 1 and 4 described here.

In contrast, referring to FIGS. 5 and 6, and Table 1, it can be confirmed that the positive electrode active material precursor and the positive electrode active material of Comparative Example 1 have a first shell part that is too thick and a second shell part that is too thin. In addition, referring to FIGS. 7 and 8, and Table 1, it can be confirmed that the positive electrode active material precursor and the positive electrode active material of Comparative Example 2 have almost no first shell part. That is, it can be confirmed that the thickness of the first shell part of Comparative Examples 1 and 2 does not satisfy Equations 1 and 4 described herein.

### Experimental Example 3

The tap density of each of the positive electrode active material precursors manufactured in the examples and comparative examples was measured and shown in Table 2 below.

The tap density was obtained by putting 50 g of each of the positive electrode active material precursor samples manufactured in the examples and comparative examples into a cylinder, tapping the cylinder containing the sample 3,000 times using a Tap Denser KYT-5000 (SEISHIN), reading a scale value to measure the volume, and calculating the tap density. Each measurement was performed three times and shown as the average value.

### Experimental Example 4

The BET specific surface area of each of the positive electrode active material precursors and positive electrode active materials manufactured in the examples and comparative examples was measured and shown in Table 2 below.

The BET specific surface area was obtained by pretreating 3.00 g of a sample at 200°C under vacuum conditions using a surface area analyzer TriStar 2 plus (Micromeritics), and measuring it using a nitrogen adsorption method.

### Experimental Example 5

The pellet density of each of the positive electrode active material precursors manufactured in the examples and comparative examples was obtained and shown in Table 2 below.

Specifically, using an Auto Pellet Press (Carver, 3887.4), the zero point for the thickness was adjusted using a cylindrical mold for a circular pellet holder with a diameter of 13 mm. Then, 3 g of each of the positive electrode active materials manufactured in the examples and comparative examples was taken into the circular pellet holder, and force was applied until a force equivalent to 2,000 kgf was reached to form pellets, and the thickness of the formed pellets was measured. Then, the pellet volume was calculated using Equation 5 below, and the pellet density was calculated using Equation 6 below:$Pellet volume \left({cm}^{3}\right) = π {\left(radius of circular pellet holder\right)}^{2} \times pellet thickness$ 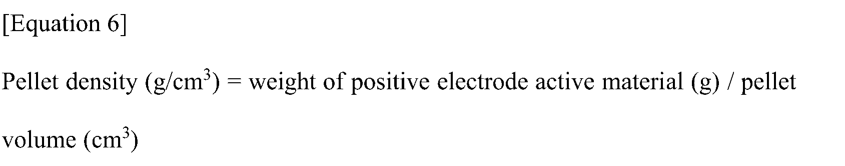 Pellet density (g/cm3) = weight of positive electrode active material (g) / pellet volume (cm3)

### Experimental Example 6

Each of the positive electrode active materials manufactured in the examples and comparative examples, a conductive material (carbon black), and a binder (PVdF) were mixed in a weight ratio of 93.15:2.90:3.95 in an N-methyl-2-pyrrolidone (NMP) solvent to prepare a positive electrode slurry. The positive electrode slurry was applied to one surface of an aluminum current collector, dried at 130°C, and rolled to prepare each positive electrode.

A separator was interposed between each of the positive electrodes manufactured as described above and a Li metal disk negative electrode to prepare an electrode assembly, which was located inside a battery case. Thereafter, an electrolyte was injected into the battery case to prepare a 2032-standard coin cell-type lithium secondary battery.

As the electrolyte, an electrolyte was used in which 1M of LiPF₆ was dissolved in an organic solvent in which ethylene carbonate:ethylmethyl carbonate:diethyl carbonate were mixed in a volume ratio of 3:3:4.

For each lithium secondary battery manufactured as described above, a CC/CV mode charge was performed to 4.6 V at 25°C with a constant current of 0.1C, and a CC mode discharge was performed until 2.0 V to activate the battery. Then, a CC/CV mode charge was performed to 4.45 V with a constant current of (1/3)C, and a CC mode discharge was performed until 2.15 V, and the initial charge capacity and discharge capacity were measured.

In addition, the energy density value was obtained by multiplying the initial discharge capacity and the pellet density value of the positive electrode active material.

**[Table 2]**

| Division | Positive electrode active material precursor | | Positive electrode active material | | |
|---|---|---|---|---|---|
| | BET specific surface area (m²/g) | Tap density (g/cm³) | BET specific surface area (m²/g) | Pellet density (g/cm³) | Energy density (mAh/cm³) |
| Example 1 | 18.4 | 1.86 | 0.35 | 2.57 | 2011.03 |
| Example 2 | 24.5 | 1.75 | 0.92 | 2.50 | 1880.1 |
| Comparative Example 1 | 18.5 | 1.88 | 0.32 | 2.50 | 1738.2 |
| Comparative Example 2 | 25.6 | 1.63 | 1.35 | 2.31 | 1681.9 |

Referring to Tables 1 and 2, it can be confirmed that the positive electrode active material precursors of Examples 1 and 2 have a thickness of the first shell part satisfying Equation 1 described herein, a tap density of 1.75 g/cm³ to 2.0 g/cm³, and a BET specific surface area of 18 m²/g to 25 m²/g, and the positive electrode active materials of Examples 1 and 2 have a thickness of the first shell part satisfying Equation 4 described herein, a pellet density of 2.5 g/cm³ to 3.00 g/cm³, and a BET specific surface area of 0.20 m²/g to 1.0 m²/g. From this, it can be confirmed that the positive electrode active materials manufactured from the positive electrode active material precursors according to the present invention have a high energy density.

In contrast, it can be confirmed that the positive electrode active materials manufactured from the positive electrode active material precursors of Comparative Examples 1 and 2 have a low energy density.

## Claims

1. A positive electrode active material precursor comprising: a manganese-nickel-based hydroxide including manganese and nickel,
wherein the manganese-nickel-based hydroxide includes a porous core part (A); a first shell part (A1) formed on the core part; and a porous second shell part (A2) formed on the first shell part,
wherein the first shell part (A1) has a thickness satisfying Equation 1 below, and
wherein the positive electrode active material precursor has a tap density of 1.75 g/cm³ to 2.0 g/cm³ and a BET specific surface area of 18 m²/g to 25 m²/g: 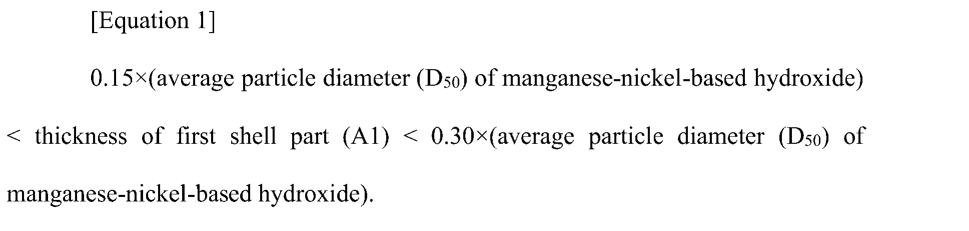 0.15×(average particle diameter (D50) of manganese-nickel-based hydroxide) < thickness of first shell part (A1) < 0.30×(average particle diameter (D50) of manganese-nickel-based hydroxide).

2. The positive electrode active material precursor according to claim 1, wherein the core part (A) has a diameter satisfying Equation 2 below: 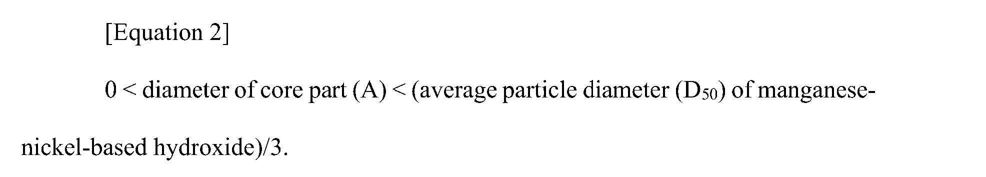 0 < diameter of core part (A) < (average particle diameter (D50) of manganese-nickel-based hydroxide)/3.

3. The positive electrode active material precursor according to claim 1, wherein the second shell part (A2) has a thickness satisfying Equation 3 below: 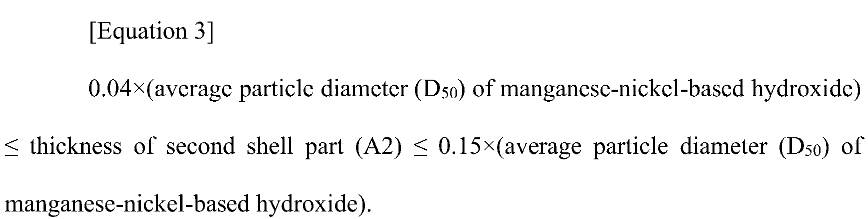 0.04×(average particle diameter (D50) of manganese-nickel-based hydroxide) ≤ thickness of second shell part (A2) ≤ 0.15×(average particle diameter (D50) of manganese-nickel-based hydroxide).

4. The positive electrode active material precursor according to claim 1, wherein the manganese-nickel-based hydroxide contains 50 mol% or more of manganese among the total transition metals.

5. The positive electrode active material precursor according to claim 1, wherein the manganese-nickel-based hydroxide has a composition represented by Chemical Formula 1 below:
[Chemical Formula 1] [Mnₐ₁Ni_{b1}M_{c1}](OH)₂
wherein:
M is at least one selected from Zr, Al, Re, V, Cr, Fe, Ga, Si, B, Ru, Ti, Nb, Mo, Mg, W, Na, and Pt, and
0.5≤a1<1.0, 0<b1≤0.5, 0≤c1≤0.1, and a1+b1+c1=1.

6. The positive electrode active material precursor according to claim 1, wherein the manganese-nickel-based hydroxide has an average particle diameter (D₅₀) of 1 µm to 15 µm.

7. The positive electrode active material precursor according to claim 1, wherein the core part (A) has a diameter of 0.33 µm or more and less than 5 µm,
the first shell part (A1) has a thickness of 0.3 µm or more and 4.5 µm or less, and
the second shell part (A2) has a thickness of 0.05 µm or more and 0.75 µm or less.

8. A method for manufacturing a positive electrode active material precursor, the method including the steps of:
(S1) introducing a solvent and a basic solution into a reactor to adjust the pH to 12.0 to 13.0, and then purging an inert gas to create a non-oxidizing atmosphere;
(S2) continuously introducing a transition metal-containing solution including manganese and nickel and a basic solution into the reactor, and performing a coprecipitation reaction under the pH of 12.0 to 13.0 to form a porous core part (A);
(S3) continuously introducing a transition metal-containing solution including manganese and nickel and a basic solution into the reactor that has gone through step (S2), and performing a coprecipitation reaction while repeating a process of lowering the pH by 0.25 to 0.5 every 20 to 60 minutes at pH 10.0 to 11.0 and then restoring the pH, thereby forming a first shell part (A1) on the porous core part (A); and
(S4) continuously introducing a transition metal-containing solution containing manganese and nickel and a basic solution into the reactor that has gone through step (S3), and performing a coprecipitation reaction at pH 10.0 to 11.0 to form a porous second shell part (A2) on the first shell part (A1), thereby producing a manganese-nickel-based hydroxide including manganese and nickel,
wherein the steps (S2) to (S4) are performed under an oxidizing atmosphere, and
the coprecipitation reaction in the step (S3) is performed for 5 to 25 hours.

9. The method for manufacturing a positive electrode active material precursor according to claim 8, wherein the coprecipitation reaction in the step (S2) is performed for 0.1 to 2.0 hours.

10. The method for manufacturing a positive electrode active material precursor according to claim 8, wherein the coprecipitation reaction in the step (S4) is performed for 35 to 55 hours.

11. The method for manufacturing a positive electrode active material precursor according to claim 8, wherein the oxidizing atmosphere is formed by introducing air and an inert gas into the reactor.

12. The method for manufacturing a positive electrode active material precursor according to claim 8, wherein the air and the inert gas are introduced in a volume ratio of 0.5:99.5 to 15:85.

13. A positive electrode active material comprising: a lithium-rich manganese-nickel-based oxide including manganese and nickel,
wherein the lithium-rich manganese-nickel-based oxide simultaneously includes a Li₂MnO₃ phase and a LiMO₂ (wherein M includes at least one selected from Ni and Mn) phase,
wherein the lithium-rich manganese-nickel-based oxide includes a porous core part (B); a first shell part (B1) formed on the core part; and a porous second shell part (B2) formed on the first shell part,
wherein the first shell part (B1) has a thickness satisfying Equation 4 below, and wherein the positive electrode active material has:
a pellet density of 2.5 g/cm³ to 3.00 g/cm³ and
a BET specific surface area of 0.20 m²/g to 1.0 m²/g: 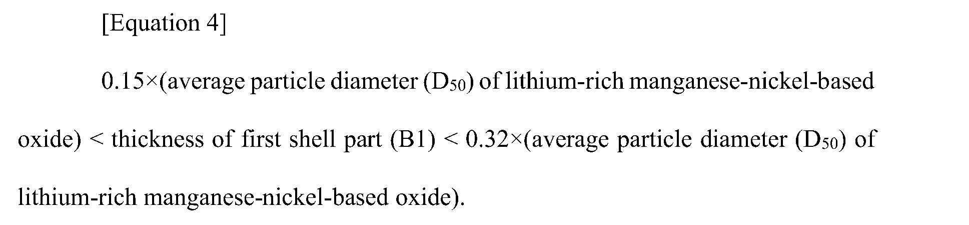 0.15×(average particle diameter (D50) of lithium-rich manganese-nickel-based oxide) < thickness of first shell part (B1) < 0.32×(average particle diameter (D50) of lithium-rich manganese-nickel-based oxide).

14. The positive electrode active material according to claim 13, wherein the lithium-rich manganese-nickel-based oxide contains 50 mol% or more of manganese among the total transition metals excluding lithium.

15. The positive electrode active material according to claim 13, wherein the lithium-rich manganese-nickel-based oxide has a composition represented by Chemical Formula 2 below:
[Chemical Formula 2] xLi₂Mn₍₁₋ₚ₎M¹ₚO₃·(1-x)LiNi_{q}MnᵣM²ₛO₂
wherein:
M¹ and M² are each independently at least one selected from Zr, Al, Re, V, Cr, Fe, Ga, Si, B, Ru, Ti, Nb, Mo, Mg, W, Na, and Pt, and
0<x<1.0, 0≤p≤0.1, 0<q≤0.5, 0.5≤r<1.0, 0≤s≤0.1, and q+r+s=1.

16. A method for manufacturing a positive electrode active material, the method including a step of mixing the positive electrode active material precursor according to claim 1 and a lithium raw material, and then calcining the mixture.

17. The method for manufacturing a positive electrode active material according to claim 16, wherein the positive electrode active material precursor and the lithium raw material are mixed so that a molar ratio of the total metal elements present in the positive electrode active material precursor and the lithium present in the lithium raw material is 1:1.2 to 1:1.6.

18. The method for manufacturing a positive electrode active material according to claim 16, wherein the calcination is performed at 850°C to 950°C.
